# EUROPÄISCHE PATENTSCHRIFT

(11) **EP 1 867 889 B1**
(45) Veröffentlichungstag und Bekanntmachung des Hinweises auf die Patenterteilung: **07.09.2011**
(21) Anmeldenummer: 07012684.2
(22) Anmeldetag: 04.07.2001
(51) Int. Cl.: F16D 69/04

(54) **Belag oder Funktionskörper oder Reibbelag für Scheibenbremsen, insbesondere für Straßen- und Schienenfahrzeuge**
Lining or functional body or friction pad for disc brakes, in particular for road and rail vehicles
Revêtement ou corps de fonctionnement ou garniture à friction pour freins à disque, en particulier pour véhicules sur route ou sur rails

(30) Priorität: 05.07.2000 DE 20011435 U
(43) Veröffentlichungstag der Anmeldung: 19.12.2007
(62) Teilanmeldung aus: 01960461.0
(73) Patentinhaber: Honeywell Bremsbelag GmbH, 21509 Glinde (DE)
(72) Erfinder: Grimme, Hansjoerg, 29481 Karwitz / Nausen (DE); Himmelsbach, Rainer, 27327 Schwarme (DE)
(74) Vertreter: Richter, Werdermann, Gerbaulet & Hofmann

(56) Entgegenhaltungen:
- EP-A- 0 084 591
- EP-A- 0 621 415
- DE-U- 20 011 435
- DE-U- 29 508 322
- FR-A- 1 392 681
- US-A- 3 490 563

## Beschreibung

### Anwendungsgebiet

Die Erfindung betrifft einen Reibbelag für Scheibenbremsen, insbesondere für Hochleistungsbremsen, für Straßen- und Schienenfahrzeuge, gemäß dem Oberbegriff des Anspruches 1.

### Stand der Technik

Reibbeläge für Scheibenbremsen gemäß dem Oberbegriff des Anspruches 1 sind bekannt.

Durch die DE 295 08 322 U ist ein Reibbelag für Scheibenbremsen für Schienenfahrzeuge bekannt, der aus einem Reibbelagträger aus einer Trägerplatte oder einem Trägerblech aus geringer Stärke, einem auf dem Reibbelagträger angeordneten dünnwandigen Rauhgrundträger aus einem Metallblech, und aus einem Rauhgrund aus einem auf der dem Reibbelagträger abgekehrten Oberfläche des Rauhgrundträgers aufgesinterten Halterungsbett aus einzelnen, mit dem Rauhgrundträger kraft- und formschlussbildenden Formkörpern mit durch Aufsintern der Formkörper auf den Rauhgrundträger erhaltbaren Hinterschneidungen oder Einziehungen besteht, wobei auf dem Rauhgrundträger mit dem Rauhgrund ein Reibbelagblock aus einem gepressten Reibwerkstoff befestigt ist.

Die FR-A-1 392 681 offenbart einen Reibbelag, der im Wesentlichen aus einem Rauhgrundträger, auf dem ein Reibbelagblock befestigt ist, und einem Reibbelagträger besteht. Dabei werden unterschiedliche Verbindungsnachweise des Reibbelagträgers mit dem Rauhgrundträger vorgeschlagen, so u. a. eine Nietverbindung, aber sowohl die Möglichkeit des Klebens als auch die des Schweißens werden als alternative Verbindungsmöglichkeiten erwähnt.

Nach der EP-A-0 621 415 ist ein Bremsbelag bekannt, der im Wesentlichen aus einem Reibbelagträger besteht, auf dem mehrere Reibbelagblöcke über Bodenplatten mit dem Reibbelagträger verbunden sind. Das Verbinden jeder Bodenplatte mit dem Reibbelagträger erfolgt dabei mittels einer am Rand der Bodenplatte umlaufenden Schweißnaht, wobei diese Schweißnaht eine geschlossene Form besitzen kann.

Die US-A-3 490 563 offenbart einen Bremsbelagträger für Scheibenbremsen für Kraftfahrzeuge, wobei der Träger aus zwei miteinander verbundenen Platten besteht. An der einen Platte ist der Bremsbelag befestigt und die zweite Platte weist ein Dämmelement mit Vorsprüngen auf, wobei die zweite Platte selbst als Dämmelement ausgebildet sein kann oder mit einem Kreisausschnitt versehen ist, in dem ein rondenförmiges Dämmelement eingesetzt ist. Der Kreisausschnitt ist mit Fixierungen versehen. In diesen Kreisausschnitt wird das kreissegmentförmige Dämmelement mit den Vorsprüngen so eingepasst, dass der Vorsprung in einer der Fixierungen des Kreisausschnittes sitzt. Das Rondenelement ist dann in dem Kreisausschnitt gehalten. Zwischen den beiden Platten des Bremsbelagträgers kann nach einer alternativen Ausführungsform auch die Dämmplatte angeordnet sein. Das Dämmelement kann darüber hinaus dicker als die das Dämmelement aufnehmende Dämmelementplatte sein und aus dieser auf der der Bremsbelagplatte abgewandten Seite hervorstehen. Das Dämmelement selbst kann aus Kunststoff oder aus Keramik bestehen. Bei diesem Bremsbelagträger wird kein mit fensterartigen Durchbrechungen versehener Reibbelagträger aus einem dünnen Metallblech eingesetzt, auf dem ein dünnwandiger Rauhgrundträger angeordnet ist, vermittels dessen Rauhgrund der Reibbelagblock befestigt und gehalten ist.

Die EP-A-0 084 591 beschreibt einen Reibbelag, insbesondere für Scheiben- und Eisenbahnbremsklötze, und ein Verfahren zu seiner Herstellung. Zur kraft- und formschlüssigen Verbindung des Reibwerkstoffblockes des Reibbelages auf dem Trägerblech ist dieses auf der den Reibwerkstoffblock tragenden Seite mit einer Struktur-Oberfläche aus kraft- und formschlussbildenden, aus dem Trägermaterial geformten Formelementen versehen, die Hinterschneidungen, oder Einziehungen aufweisen, während auf der Struktur-Oberfläche die aufgepresste Reibmaterialmischung in Blockform unter Ausfüllung der Hinterschneidungen der einzelnen Formelemente befestigt ist.

### Aufgabe, Lösung, Vorteil

Der Erfindung liegt die Aufgabe zugrunde, einen Reibbelag für Scheibenbremsen der eingangs genannten Art zu schaffen, mit dem wirtschaftlich die Festigkeitseigenschaften von Trägerplatten für Bremsbeläge bei gleichzeitiger Gewichtseinsparung verbessert werden und Trägerplatten erhalten werden, deren mechanisch/dynamische Eigenschaften auch nach der Rauhgrund-Behandlung erhalten bleiben. Außerdem soll der Rauhgrund auch bei empfindlichen Trägerblechen eingesetzt werden, ohne dass sich dabei die Festigkeitseigenschaften des aus Stahl bestehenden Reibbelagträgers nach der Rauhgrund-Behandlung verändern.

Diese Aufgabe wird durch die in dem Anspruch 1 gekennzeichneten Merkmale gelöst.

Bei diesem Reibbelag wird der Rauhgrund nicht auf den eigentlichen Reibbelagträger wie bei den bekannten Reibbelägen aufgebracht, sondern auf einem gesonderten Rauhgrundträger, der wiederum auf dem Reibbelagträger, d. h. der Trägerplatte bzw. dem Trägerblech, befestigt wird. Hierbei ist der Rauhgrundträger auf dem Reibbelagträger vermittels einer rundum verlaufenden Randverschweißung befestigt, so dass einerseits eine feste Verbindung zwischen dem Rauhgrundträger und dem Reibbelagträger erreicht wird und zum anderen das Eindringen von Feuchtigkeit zwischen dem Rauhgrundträger und dem Reibbelagträger verhindert wird.

Dabei wird so vorgegangen, dass ein Blech als Rauhgrundträger entsprechend der Reibbelagkontur gestanzt wird. Dieses Blech als Rauhgrundträger wird dann mit dem Rauhgrund versehen und der beschichtete Rauhgrundträger wird dann anschließend auf den eigentlichen Reibbelagträger gschweißt. Für das Aufschweißen bietet sich das Laserstrahlschweißen an, da mit diesem Verfahren die Kontur rundherum dicht verschweißt werden kann und auch beliebig viele Schweißpunkte auf der Fläche verteilt angeordnet werden können. Dabei kann der Rauhgrundträger bei dem Stanzvorgang gesickt oder geformt werden, wodurch eine höhere Festigkeit erhalten wird. Eventuell ausgebildete Hohlräume können vor dem Verschweißen mit einem Dämpfungsmaterial gefüllt werden.

Zur Gewichtseinsparung ist der Reibbelagträger mindestens mit einer fensterartigen Durchbrechung versehen, wobei der Rauhgrundträger mit dem Reibbelagträger im Randbereich der fensterartigen Durchbrechung verschweißt wird.

In der fensterartigen Durchbrechung des Reibbelagträgers ist ein Fülloder Dämmmaterial, z. B. aus einem Kunststoff oder Keramik zum Dämmen von vorzugsweise Temperaturen oder Schall, angeordnet. Zur Erhöhung bzw. Verbesserung des Wärmeflusses kann ein metallisches Füll- bzw. Dämmmaterial eingesetzt werden, z. B. Kupfer, Knetlegierungen aus Leichtmetall. Auch besteht die Möglichkeit, in der fensterartigen Durchbrechung des Reibbelagträgers eine Füllung aus Keramik anzuordnen, um trotz geringem Gewichtes eine hohe Festigkeit des Reibbelagträgers zu erhalten.

Darüber hinaus besteht Rauhgrundträger aus einem dünnen Blech aus einem Verbundmaterial aus Kupfer, verkupfertem Stahlblech und Aluminiumbeschlägen, wobei die beiden Komponenten des Verbundmaterials vermittels Ultraschall oder Laser miteinander verschweißt sind. Auf die oberste Komponente des Verbundmaterials ist dann der Rauhgrund aufgebracht.

Um eine ausreichende Haftung zwischen dem Reibbelagblock und dem Rauhgrundträger bei gleichzeitiger Verbesserung des Korrosionsschutzes sowohl für den Rauhgrundträger als auch für den Reibbelagträger zu erreichen, wird vor dem Aufpressen des Reibmaterials auf den Rauhgrundträger ein galvanischer Metallüberzug aufgebracht, der aus Kupfer, Silber, Zinn, Cadmium, Zink, Chrom oder einem anderen geeigneten Material besteht, wobei auch ein Überzug aus einem hochtemperaturbeständigen Kunststoff, wie z. B. Trifluoräthylen, Polytetrafluoräthylen, Polysiloxane, Silikonkautschuk, angebracht sein kann. Das Zusammenwirken von Rauhgrund, d. h. Halterungsbett und galvanischem Überzug, führt zu einem hohen Korrosionsschutz für den Rauhgrundträger, während der Rauhgrund die Haftung zwischen dem Reibbelagblock und dem Rauhgrundträger bewirkt, da der galvanische Überzug dem Konturenverlauf des Rauhgrundes folgt. Auf diese Weise ist ein umweltfreundliches Verfahren zur Herstellung Reibbelägen geschaffen.

Desweiteren wird vorgeschlagen, bei einem Reibbelag der eingangs genannten Art vorzusehen, dass das den Rauhgrund bildende Halterungsbett aus einem Materialgemisch aus einem Anteil (A) mit niedrigerem Schmelzpunkt und einem Anteil (B) mit einem höheren Schmelzpunkt besteht.

Durch die Verwendung dieses Gemisches für die Ausbildung des Halterungsbettes in Form einer Struktur - aus kraft- und formschlussbildenden aus dem Gemisch geformten Formelementen, die Hinterschneidungen, Einziehungen u. dgl. aufweisen, ist es möglich, dass die Strukturoberfläche eine völlig bizarre und unregelmäßige Struktur aufweist, und zwar sowohl in der Makrostruktur als auch in der Mikrostruktur bezüglich der einzelnen aufgesinterten Teilchen, so dass jeder einzelne aufgesinterte Formkörper gegenüber einer Kugeloberfläche eine größere Oberfläche aufweist, ohne jedoch eine Kugelgestalt zu besitzen. Hierdurch wird eine sehr hohe mechanische Festigkeit und eine hohe Temperaturbeständigkeit erreicht, was zu einer hohen Haftfähigkeit und Halterungssicherheit des Reibbelagblockes auf dem Rauhgrundträger führt. Ein weiterer Vorteil ergibt sich dadurch, dass Rauhgrundträger aus einem sehr dünnen Stahl eingesetzt werden können, ohne dass die Haftung zwischen Reibbelagblock und dem Rauhgrund des Rauhgrundträgers bzw. dem Rauhgrundträger beeinträchtigt wird.

Gemäß vorteilhafter Ausführung ist dabei vorgesehen, dass der niedrig schmelzende Anteil (A) ein niedrig schmelzendes Metall wie Zinn, Weichoder Schnell-lot o. dgl. oder eine niedrig schmelzende Legierung wie Bronze, Messing o. dgl. ist und dass der höher schmelzende Anteil (B) aus Eisen, Sand, Keramikpulver o. dgl. besteht, wobei der Schmelzpunkt des höher schmelzenden Anteils (B) unter dem Schmelzpunkt des Rauhgrundträgers liegen sollte. Der Rauhgrundträger besteht aus Stahl, V2A-Stahl, Keramik, Aluminium oder anderen geeigneten Werkstoffen, wobei auch der eigentliche Reibbelagträger in gleicher Weise ausgebildet sein kann. Während der Anteil (A) niedrig schmelzend ist, müssen die Schmelzpunkte von Anteil (B) und auch vom Material des Rauhgrundträgers hoch sein; sie können unterschiedlich oder auch gleich sein.

Trotz des galvanischen Metallüberzuges ist ein direkter Kraft- und Wärmeübergang von dem Reibbelagblock auf das aufgesinterte Materialbett und damit auf den Rauhgrundträger möglich. Eine zusätzliche Verbindungsschicht kann vorzugsweise entfallen. Insbesondere durch die Verwendung von Bronze wird zusätzlich eine Unterrostung und Anrostung vermieden, so dass die Dauerhaltbarkeit vergrößert und die Korrosionsanfälligkeit auch unter extremen Umweltbedingungen verringert wird.

Hinzukommt, dass ein solcher Reibbelag durch die Verwendung des Kombinationswerkstoffes und insbesondere durch den verwendeten Rauhgrundträger optimale Notlaufeigenschaften im Bereich des aufgesinterten Halterungsbettes aufweist. Durch die bizarre Oberflächenstruktur im Bremsscheibenberühungsbereich ist immer ein Mischmaterial aus Reibwerkstoffmaterial und aufgesintertem Material mit der Bremsscheibe in Berührung, so dass noch eine Bremsung mit dem Rest Reibwerkstoffmaterialanteil durchgeführt werden kann. Gleichzeitig ist ein Bremsscheibenschutz gegeben, da durch den verwendeten Kombinationswerkstoff eine Zerstörung der Bremsscheibe vermieden werden kann. Es ist daher durch diese Struktur eine hohe Haftung und Reibung bis zum Schluss gegeben, so dass Notlaufeigenschaften gegeben sind. Ein Abscheren des Restbelages ist durch die gegebene Verzahnung zwischen der bizarren Struktur der Strukturoberfläche mit dem Reibbelagblock nicht möglich, wobei noch zusätzlich die Sicherheit dadurch erhöht ist, dass eine Unterrostung sicher verhinderbar ist.

Weiterhin hat es sich gezeigt, dass die verwendete Strukturoberfläche für den Rauhgrund noch zusätzlich den Vorteil hat, dass sich zwischen dem Reibbelagblock und dem aufgesinterten Halterungsblech bei weitgehender Ausfüllung der Hinterschneidungen und Einziehungen durch den Reibwerkstöff kleine Lufteinschlüsse ergeben, die den Materialien die Möglichkeit geben, sich in die sich so ergebenden Kavernen hinein auszudehnen, so dass auftretende Wärmespannungen verringert werden. Hierdurch ergibt sich eine zusätzliche Schonung des Reibbelages und eine Verbesserung der Dauerhaltbarkeit.

Gemäß einer bevorzugten Ausführungsform ist vorgesehen, dass der niedrig schmelzende Anteil (A) aus etwa 30 % Bronze und der höher schmelzende Anteil (B) aus einem 70 % Fe-Pulver besteht, wobei die verwendete Bronze einen Anteil von 10 % Zinn aufweisen sollte. Bei Verwendung eines derartigen Gemisches ergibt sich hinsichtlich aller gewünschten Eigenschaften wie Verschleißfestigkeit, Geräuschdämpfung und Korrosionsschutz ein optimales Ergebnis.

Erfindungsgemäß ist vorgesehen, dass das aufgesinterte Halterungsbett aus einer auf den Rauhgrundträger im Bereich der Reibmaterialaufnahmefläche vollflächig oder teilflächig überdeckenden Grundschicht aus einzelnen, kraft- und formschlussbildenden Formelementen, die Hinterschneidungen, Einziehungen o. dgl. aufweisen, besteht. Dabei können die Greifelemente als zylindrische Säulen, kegelstumpfförmige Säulen, als echter Kegelstumpf oder auch in Form einer Pyramide in einer dreieckigen, viereckigen oder mehreckigen Grundfläche ausgebildet sein, wobei die einzelnen Greifelemente jeweils in einem Abstand zueinander angeordnet sind. Die Auswahl der Art der verwendeten Greifelemente hängt von den gewünschten Eigenschaften des Reibbelages ab. Während eine säulenartige Ausbildung der Greifelemente dazu führt, dass der Anteil zwischen Halterungsbettmaterial und Reibwerkstoffmaterial in der Berührungsfläche auch bei zunehmendem Verschleiß relativ konstant bleibt, steigt bei der Verwendung anderer Greifelementformen der Anteil des Halterungsmaterials, so dass hier ein abnehmender Verschleiß erzielt werden kann, so dass auch bei einer starken Belastung des Reibbelages zwischen zwei Überprüfungen die Bremseigenschaften erhalten bleiben.

Besonders vorteilhaft ist bei dieser Ausführungsform die bizarre Struktur der aufgesinterten Teilchen für die Herstellung des Rauhgrundes, wobei jeder Sinterkörper gegenüber einer Kugelfläche eine größere Oberfläche aufweist, ohne jedoch Kugelgestalt zu besitzen. Dadurch wird eine hohe mechanische Festigkeit und Temperaturbeständigkeit und eine hohe Haftfähigkeit erhalten.

Insbesondere durch die Verwendung eines mit einem Rauhgrund versehenen Rauhgrundträgers für die Aufnahme des Reibbelagblockes wird erreicht, dass bei der Rauhgrundherstellung entsprechend der bisher bekannten Verfahren der eigentliche Reibbelagträger in seinen mechanischen und chemischen Eigenschaften in keiner Weise beeinträchtigt wird. Hinzukommt, dass Rauhgrundträger aus einem sehr dünnen Material verwendet werden können, und dass auch der eigentliche Reibbelagträger ebenfalls geringere Stärken aufweisen kann, da die Gesamtfestigkeit durch den Verbund des Rauhgrundträgers mit dem Reibbelagträger erhalten wird.

Weitere vorteilhafte Ausgestaltungen und Weiterbildungen der Erfindung sind in den Unteransprüchen gekennzeichnet.

### Kurzbeschreibung der Zeichnung

Ausführungsbeispiele der Erfindung werden nachstehend anhand der Zeichnungen näher erläutert. Es zeigen
- Fig. 1: einen Reibbelagträger mit hammerkopfartig ausgebildeten Endbereichen in einer Ansicht auf die den Reibbelagblock tragende Trägersei- te,
- Fig. 2: den Reibbelagträger ohne Reibbelagblock je- doch mit angeschweißtem einen Rauhgrund tragenden Rauhgrundträger in einer Ansicht auf den den Rauhgrundträger tragenden Reibbe- lagträger,
- Fig. 3: einen Reibbelagträger mit einem einen Rauh- grund tragenden Rauhgrundträger, der mit dem Reibbelagträger punktverschweißt ist in einer Ansicht, auf dem den Rauhgrundträger tragen- den Reibbelagträger,
- Fig. 4: einen vergrößerten senkrechten Schnitt durch einen Reibbelagträger mit auf diesem einen Rauhgrund tragenden Rauhgrundträger und ei- nem darauf befestigtem Reibbelagblock,
- Fig. 5A, 5B, 5C und 5D: Ansichten von oben auf erfindungsgemäße Reibbelagträger mit verschiedenartig ausgebildeten fensterartigen Durchbrechungen,
- Fig. 6: einen vergrößerten senkrechten Schnitt durch einen mit einer fensterartigen Durchbrechung versehenen Reibbelagträger und mit an dem Reibbelagträger angeschweißten Rauhgrund- träger,
- Fig. 7: einen vergrößerten senkrechten Schnitt durch einen Reibbelagträger mit mehreren fensterar- tigen Durchbrechungen und mit einem im Be- reich der fensterartigen Durchbrechungen an dem Reibbelagträger angeschweißten Rauh- grundträger,
- Fig. 8: einen vergrößerten senkrechten Schnitt durch einen Reibbelagträger mit einer fensterartigen Durchbrechung, die mit einem Dämmstoff aus- gefüllt ist,
- Fig. 9: einen vergrößerten senkrechten Schnitt durch einen Reibbelagträger mit einer fensterartigen Durchbrechung mit einer Keramikfüllung,
- Fig. 10: einen vergrößerten senkrechten Schnitt durch einen Rauhgrundträger aus einem Verbund- material,

- Fig. 11: einen vergrößerten senkrechten Schnitt durch einen Reibbelagträger mit zwischen dem Rauhgrundträger und dem Reibbelagträger an- geordneten Dämpfungsplatte,
- Fig. 12: einen vergrößerten senkrechten Schnitt durch einen Rauhgrundträger mit einem aufgebrach- ten Halterungsbett in Form von Hinterschnei- dungen oder Einziehungen aufweisenden Formkörpern,
- Fig. 13: in einer Ansicht von oben einen Reibbelagträ- ger mit aufgebrachten Rauhgrundträger mit ei- ner weiteren Ausführungsform des aufgebrach- ten Halterungsbettes als Rauhgrund,
- Fig. 14: einen senkrechten Schnitt gemäß Linie XIV-XIV in Figur 13 und
- Fig. 15: in einer Schnittdarstellung eine weitere Ausfüh- rungsform des Halterungsbettes als Rauhgrund auf dem Rauhgrundträger.

### Detaillierte Beschreibung der Erfindung und bester Weg zur Ausführung der Erfindung

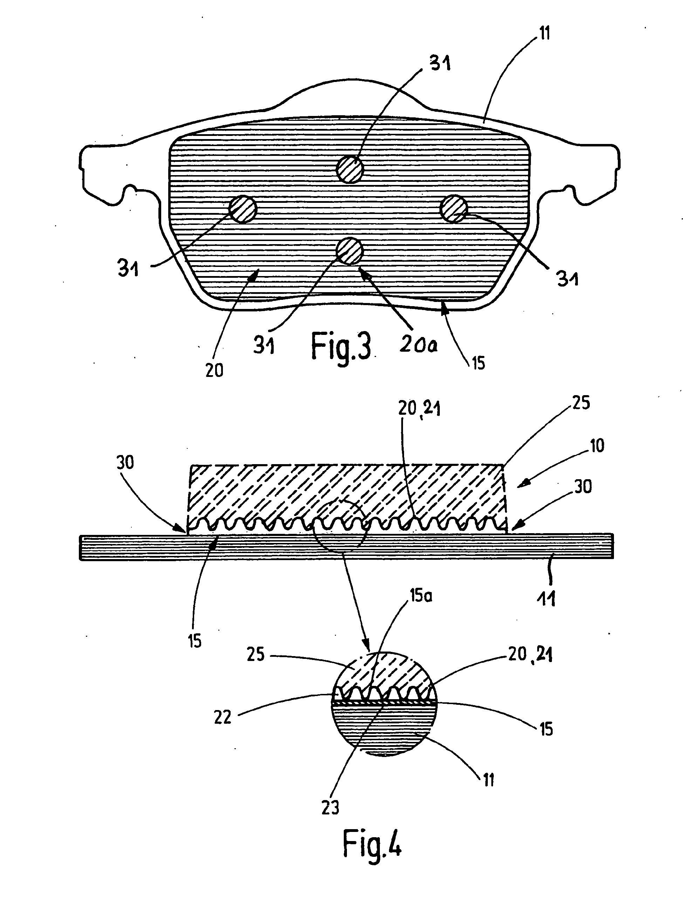

In Fig. 4 ist ein Reibbelag 10 dargestellt, der aus einem Reibbelagträger 11 in Form einer Grundplatte, z. B. einer Trägerplatte oder eines Trägerbleches, einem auf dem Reibbelagträger 11 angeordneten dünnwandigen Rauhgrundträger 15 aus einem Metallblech oder einem anderen geeigneten Material, einem Rauhgrund 20 aus einem auf der dem Reibbelagträger 11 abgekehrten Oberfläche 15a des Rauhgrundträgers 15 aufgesinterten Halterungsbett 21 aus einzelnen, mit dem Rauhgrundträger 15 kraft- und formschlussbildenden Formkörpern 22 mit Hinterschneidungen, Einziehungen o. dgl. 23 und einem auf dem Rauhgrundträger 15 mit dem Rauhgrund 20 befestigten Funktionsblock 25, beispielsweise aus einem Reibmaterial, einem Kunststoff, insbesondere solchem Kunststoff, einem Metallpulver-Kunststoffgemisch oder aus einem Hart- oder Weichmetall, die nicht geeignet sind, sich verkleben zu lassen oder sich anderweitig aufbringen lassen, beispielsweise aus einem Polymer oder einem unter dem Handelsnamen "TEFLON" bekannten Polytetrafluoräthylen, besteht, wobei der Rauhgrundträger 15 auf dem Reibbelagträger 11 vermittels einer Schweiß-, Niet- oder Klebverbindung 30 oder anderweitigen Verbindungsverfahren, wie Einprägeverfahren, befestigt ist.

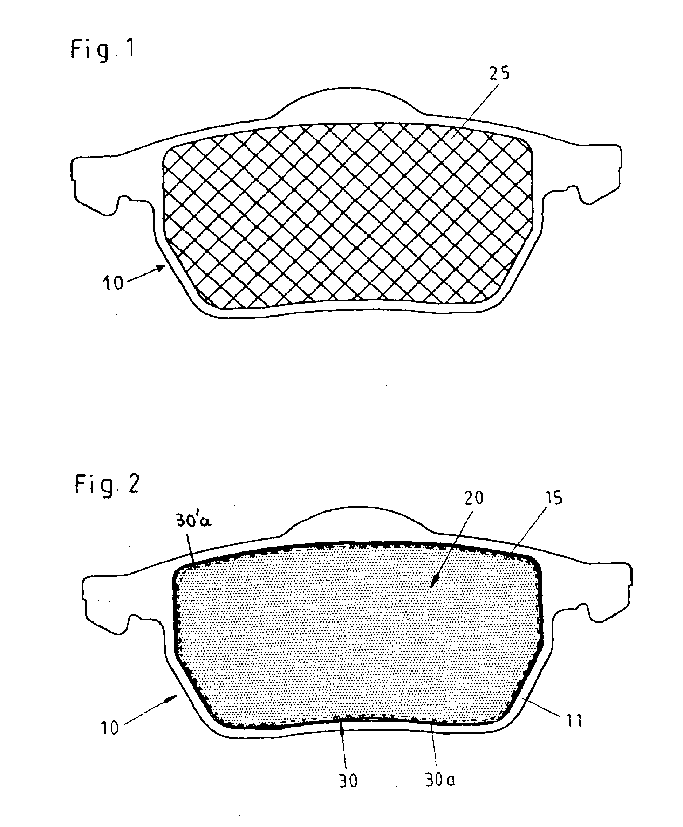

In den Fig. 1 bis 4 ist ein Reibbelag 10 dargestellt, der aus einem Reibbelagträger 11 aus Stahl oder anderen geeigneten Werkstoffen besteht. Der Reibbelagträger 11 besteht aus einem flachen oder zwei- oder dreidimensionalen oder einteiligen oder mehrteiligen Trägerblech. Auf dem Reibbelagträger 11 ist ein dünnwandiger Rauhgrundträger 15 angeordnet, der ebenfalls aus einem dünnen metallischen Material besteht. Dieser Rauhgrundträger 15 trägt auf seiner dem Reibbelagträger 11 abgekehrten Oberfläche 15a ein aufgesintertes Halterungsbett 21 aus einzelnen mit dem Rauhgrundträger 15 kraft- und formschlussbildenden Formkörpern 22 mit Hinterschneidungen, Einziehungen o. dgl. 23. Auf dem Rauhgrundträger 15 mit seinem Rauhgrund 20 ist ein Reibbelagblock 25 angeordnet, der aus einer gepressten Reibmaterialmischung besteht. Dieser Reibbelagblock 25 ist auf den Rauhgrund 20 aufgepresst und kraft- und formschlüssig mit dem Rauhgrundträger 15 verbunden.

Der Rauhgrundträger 15 ist auf dem Reibbelagträger 11 vermittels Schweiß-, Niet- oder Klebverbindungen 30 befestigt, wobei auch anderweitige Verbindungsmittel und Verbindungsverfahren eingesetzt werden können.

Die Randverschweißung 30a stellt bei Fig. 2 eine Konturenverschweißung dar, wobei die Schweißnaht z. B. mit Versatz nach innen, ausgehend vom äußeren Rand, mit bis 5 mm gesetzt werden kann, was bei 30'a angedeutet ist. Die Schweißnaht kann auch nach außen auf die Außenkante gesetzt werden (Fig. 2).

Erfindungsgemäß ist der Rauhgrundträger 15 mit seinem Rauhgrund 20 und seinem Reibbelagblock 25 auf dem Reibbelagträger 11 vermittels einer rundum verlaufenden Randverschweißung 30a befestigt (Fig. 2). Durch diese rundumverlaufende Randverschweißung 30a ist der Rauhgrundträger 15 feuchtigskeitsdicht mit dem Reibbelagträger 11 verbunden. Der Reibbelagblock 25 ist hiernach nicht direkt auf dem Reibbelagträger 11 angeordnet, sondern auf dem zwischen dem Reibbelagblock und dem Reibbelagträger angeordneten Rauhgrundträger 15.

Die Randverschweißung 30a zur Befestigung des Rauhgrundträgers 15 auf dem Reibbelagträger 11 erfolgt mittels Laserstrahlschweißen. Auch besteht die Möglichkeit, den Rauhgrundträger 15 auf dem Reibbelagträger 11 vermittels Punktverschweißung 31 zu befestigen, wobei die Punktverschweißung 31 an rauhgrundfreien Flächen 20a vorgenommen wird (Fig. 3).

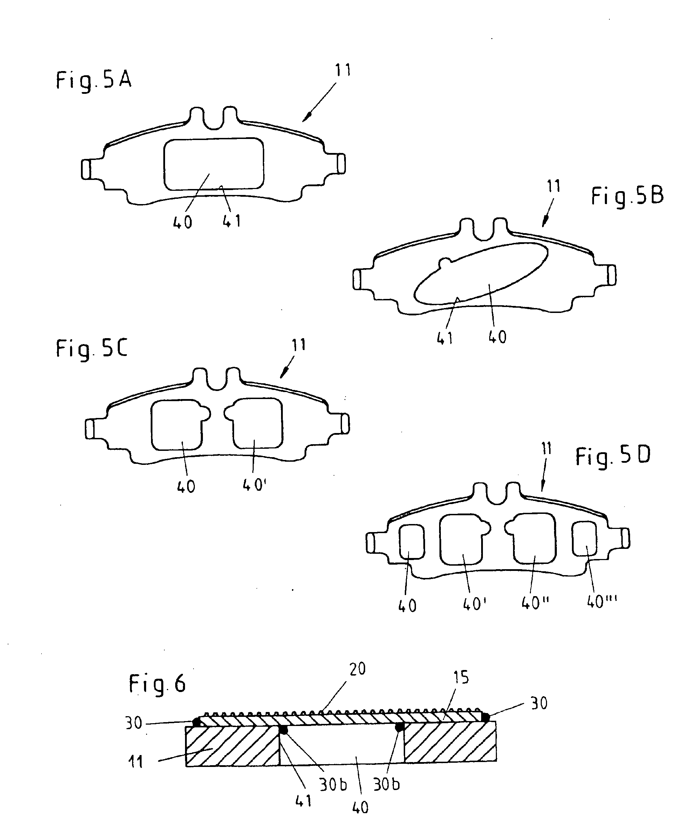

Bei den erfindungsgemäßën Ausführungsformen gemäß Fig. 5A, 5B, 5C und 5D ist der Reibbelagträger 11 mit mindestens einer fensterartigen Durchbrechung 40 versehen. Diese fensterartige Durchbrechung 40 kann gemäß Fig. 5A und 5B unterschiedliche Formgebungen aufweisen. Fig. 5C zeigt einen Reibbelagträger 11 mit zwei Durchbrechungen 40, 40' und Fig. 5D einen Reibbelagträger 11 mit vier fensterartigen Durchbrechungen 40, 40', 40", 40"'.

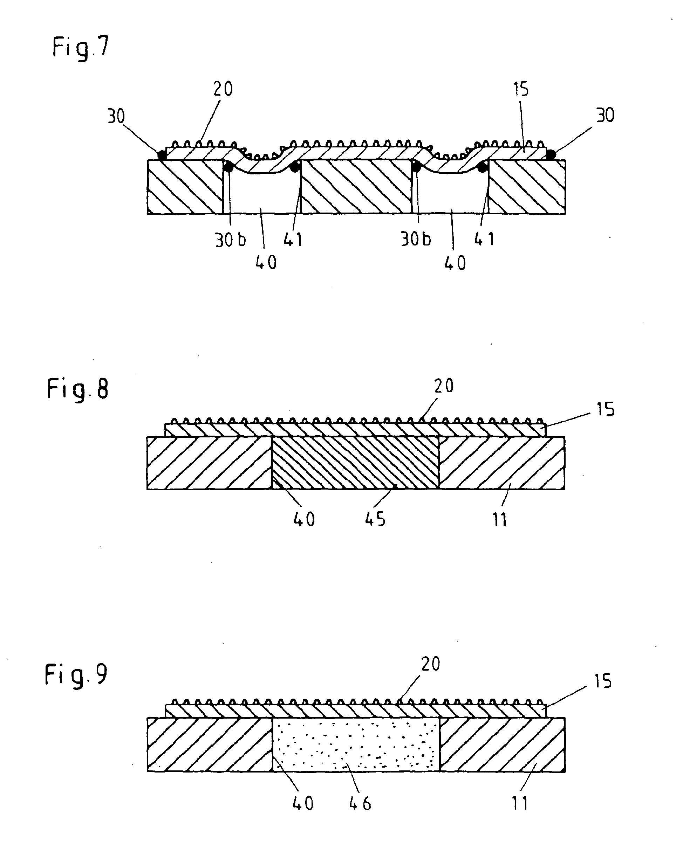

Wie Fig. 6 zeigt, ist neben der rundum verlaufenden Randverschweißung 30a zum Befestigen des Rauhgrundträgers 15 auf dem Reibbelagträger 11 der Rauhgrundträger 15 noch zusätzlich im Randbereich 41 der Durchbrechung 40 vermittels Schweißverbindung 30b verschweißt. Dabei besteht die Möglichkeit, bei der Verwendung eines sehr dünnen Rauhgrundträgers 15 diesen beim Aufbringen auf den Reibbelagträger 11 derart zu verformen, dass Abschnitte 15a des Rauhgrundträgers 15 in die fensterartigen Durchbrechungen 40 eingedrückt werden, wie dies in Fig. 7 dargestellt ist. Im Bereich der inneren Wandflächen dieser fensterartigen Durchbrechungen erfolgt dann ein zusätzliches Verschweißen des Rauhgrundträgers 15 mit dem Reibbelagträger 11. Der Rauhgrundträger 15 kann auf dem Reibbelagträger 11 vermittels V-Naht-Schweißung, durch Verschweißen an der Außenkante oder von unten befestigt werden.

Zur Geräuchsdämpfung ist bei dem Reibbelag 10 ein Reibbelagträger 11 mit einer fensterartigen Durchbrechung 40 eingesetzt, wobei die Durchbrechung 40 mit einem Füll- oder Dämmmaterial 45 ausgefüllt ist (Fig. 8). Dieses Dämmmaterial 45 besteht bevorzugterweise aus einem Kunststoff wie z. B. einem Schaumkunststoff.

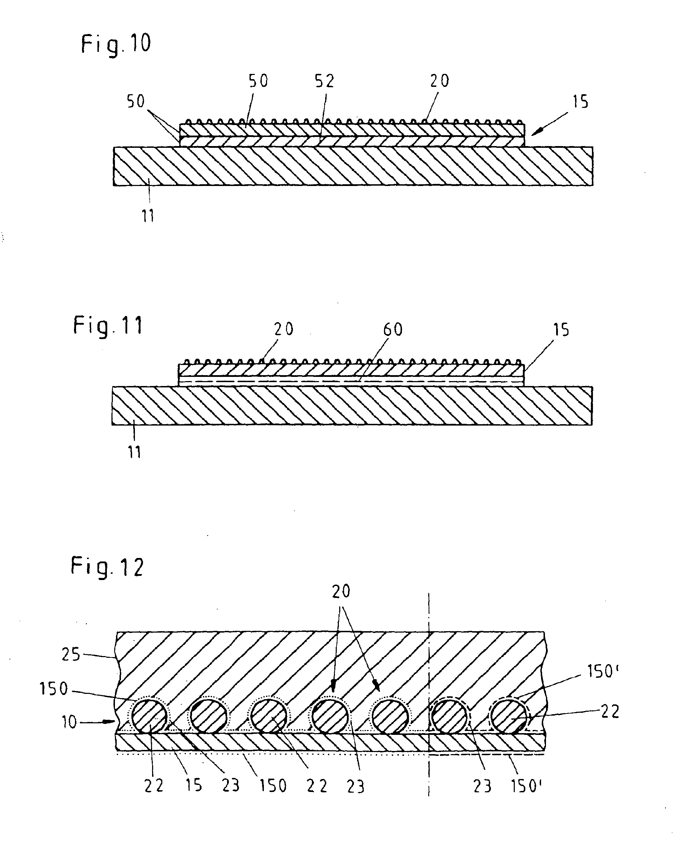

Die fensterartige Durchbrechung 40 in dem Reibbelagträger 11 kann auch mit einer Füllung 46 aus Keramik verschlossen sein. Diese Ausgestaltung hat den Vorteil, dass trotz eines leichten Gewichtes des Reibbelagträgers 11 dieser eine hohe Festigkeit und Eigensteifigkeit aufweist. Erfindungsgemäß besteht der Rauhgrundträger 15, in Fig. 10 dargestellt, wie aus einem dünnen Blech aus einem Verbundmaterial 50 aus Kupfer, verkupfertem Stahlblech einerseits und Aluminium andererseits, wobei die beiden Komponenten 51 und 52 des Verbundmaterials 50 vermittels Ultraschall oder Laser miteinander verschweißt sind. Bei diesem Verbundmaterial 50 besteht die obere Komponente 51 aus Kupfer oder verkupfertem Stahlblech und die untere Komponente 52 aus Aluminium. Auf die obere Komponente 51 des Verbundmaterials 50 ist dann der Rauhgrund 20 aufgebracht. Mit dieser Ausgestaltung des Rauhgrundträgers 15 in Form eines Verbundmaterials 50 wird ein Rauhgrundträger 15 durch die Verwendung von Aluminium mit äußerst geringem Gewicht eingesetzt.

Zwischen dem Rauhgrundträger 15 mit dem Rauhgrund 20 und dem Reibbelagträger 11 kann gemäß Fig. 11 eine Dämpfungsplatte oder -folie 60 aus Gummi, einem gummiartigen Kunststoff oder einem federndelastischen Kunststoff angeordnet sein, wodurch eine Schwingungs- und Geräuschdämpfung eintritt.

Wie in Fig. 12 gezeigt, kann das Halterungsbett 21 als Rauhgrund 20 auf dem Rauhgrundträger 15 aus auf den Rauhgrundträger 15 aufgesinterten, kugelförmigen Formkörpern 22, die im Befestigungsbereich Hinterschneidungen 23 bilden, bestehen. Auf das Halterungsbett 21 ist bevorzugterweise ein galvanischer Überzug 150 aus Metall aufgebracht, der die einzelnen Formkörper umgibt und der den von den Formkörpern gebildeten Kulturen angepasst ist, wobei der Überzug 150 auch dem Verlauf der Hinterschneidungen, Einziehungen o. dgl. 23 folgt, so dass ein geschlossener metallischer Überzug erhalten wird; dadurch wird ein guter Korrosionsschutz für den Rauhgrundträger 15 und somit auch für den Reibbelagträger 11 geschaffen. Der metallische Überzug 150 kann aus Kupfer, Silber, Zinn, Cadmium, Zink, Nickel oder einem anderen geeigneten Material bestehen. Der Vorteil, den der galvanische Teilüberzug erbringt, liegt in einer genauen Maßhaltigkeit in Bezug auf die Dicke des Überzuges. Außerdem bleiben die Konturen des Halterungsbettes 21 voll erhalten, so dass trotz des metallischen Überzuges 150 zwischen dem aufgepressten Reibbelagblock 25 und dem Rauhgrund 20 auf dem Rauhgrundträger 15 ein hoher Kraft- und Formschluss besteht.

Neben einem Überzug 150 aus metallischen Werkstoffen kann auch als Überzug ein die gleichen Eigenschaften aufweisender Kunststoff verwendet werden. Ein derartiger Überzug ist in Fig. 12 bei 150' angedeutet. Als Kunststoffe eignen sich insbesondere solche, die auch bei höheren Temperaturen beständig sind, so unter anderem Silikonkautschuk, Trifluoräthylen, Polytetrafluoräthylen, Polysiloxane u. dgl..

Die Reibmaterialmischung wird unter Zuhilfenahme eines entsprechenden Formelementes auf den mit dem Halterungsbett 21 versehenen Rauhgrundträger 15 derart aufgepresst, dass während des Pressvorganges die Reibmaterialmischung in die Zwischenräume zwischen die einzelnen Formkörper und in diejenigen Räume einfließt, die von Hinterschneidungen, Einziehungen u. dgl. 23 gebildet sind. Auf diese Weise erfolgt vermittels der Formkörper eine innige Verbindung zwischen dem sich verformenden Reibbelagblock 25 und dem Halterungsbett 21, die sich ineinander Verkrallen und Verzahnen. Es erfolgt somit eine vollflächige Ausfüllung der Reibmaterialaufnahmefläche auf dem Rauhgrund 20, so dass sich hier keine oder nur eine sehr geringe Anzahl von Freiflächen oder Freiräumen ergibt.

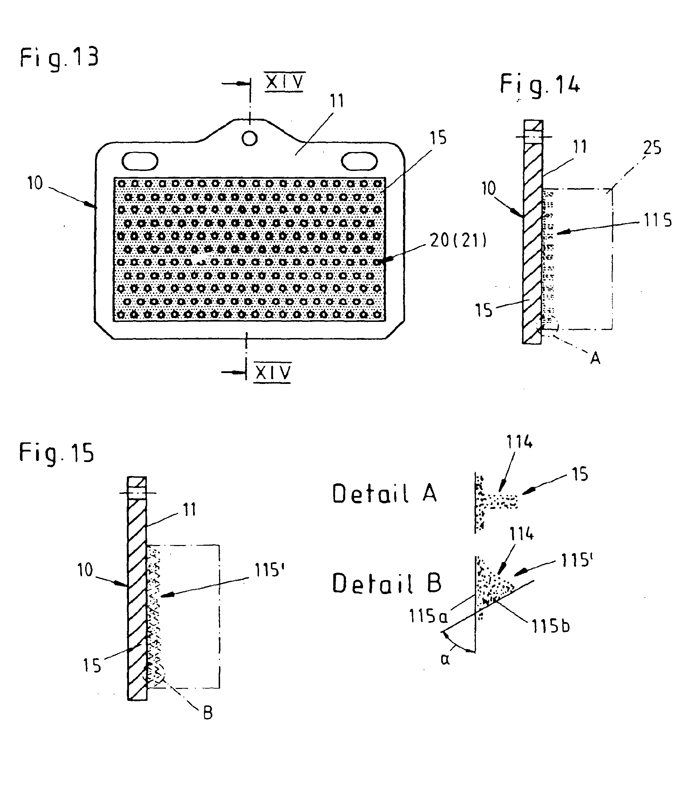

Fig. 13 zeigt einen Reibbelagträger 11 mit darauf angeordnetem Rauhgrundträger 15 mit auf diesem ausgebildeten Rauhgrund 20. Der gemäß Fig. 13 auf den Rauhgrundträger 15 aufgebrachte Rauhgrund 20 besteht aus einer Anzahl von Greifelementen 115 in Form von zylindrischer oder kegelstumpfförmiger Säulen oder als Kegelstumpf, wie im Detail A angedeutet ist. Hierbei ergeben sich die Greifelemente 115 in einer Makrobetrachtung als Säulen, während sich bei einer anhand der nachfolgenden Figuren noch näher dargestellte Vergrößerung zeigt, dass die Greifelemente 115 in sich als bizarre Strukturen mit Hinterschneidungen, Einziehungen u. dgl. 114 ausgebildet sind.

In Fig. 15 ist eine weitere Ausführungsform der Greifelemente 115' dargestellt, wobei diese in Abweichung zu Fig. 14 als Pyramiden mit einer dreieckigen, viereckigen oder mehreckigen Grundfläche ausgebildet sind. Um hier optimale Halterungs- und Verschleißeigenschaften zu erhalten, ist dabei vorgesehen, dass der Pyramidenwinkel Alpha zwischen der Pyramidengrundfläche 115a und der Pyramidenseite 115b etwa 60° beträgt, wie im Detail B angedeutet ist.

Der erfindungsgemäße Reibbelag 10 hat den Vorteil, dass trotz Temperaturbehandlung keine Materialerweichung oder irgendein Festigkeitsverlust im Bezug auf den Reibbelagträger 11 erfolgt. Mit "Reibbelagträger" 11 ist das Trägerblech bzw. die Trägerplatte bezeichnet, die den Rauhgrundträger 15 mit dem Rauhgrund 20 und dem darauf angeordneten Reibbelagblock 25 trägt.

Die Erfindung ist nicht beschränkt ausschließlich auf Reibbeläge, wie voranstehend beschrieben und in den Zeichnungen dargestellt.

## Patentansprüche

1. Reibbelag (10) für Scheibenbremsen, insbesondere für Hochleistungsbremsen, für Straßen- und Schienenfahrzeuge, der aus
a.) einem Reibbelagträger (11) aus einer Trägerplatte oder einem Trägerblech,
b.) einem auf dem Reibbelagträger (11) angeordneten Rauhgrundträger (15) aus einem Metallblech,
c.) einem Rauhgrund (20) aus einem auf der dem Reibbelagträger (11) abgekehrten Oberfläche (15a) des Rauhgrundträgers (15) aufgesinterten Halterungsbett (21) aus einzelnen, mit dem Rauhgrundträger (15) kraft- und formschlussbildenden Formkörpern (22) mit durch Aufsintern der Formkörper (22) auf den Rauhgrundträger (15) erhaltbaren Hinterschneidungen oder Einziehungen (23) und
d.) einem auf dem Rauhgrundträger (15) mit dem Rauhgrund (20) befestigten Reibbelagblock (25), der aus einem gepressten Reibwerkstoff besteht, wobei
der Reibbelagträger (11) aus einem Metallblech mit geringer Stärke und der Rauhgrundträger (15) aus einem dünnwandigen Metallblech bestehen,
**dadurch gekennzeichnet,**
**dass**
der dünnwandige Rauhgrundträger (15) mit dem aufgesinterten Rauhgrund (20) auf dem Reibbelagträger (11) vermittels einer rundherum verlaufenden Laser-Randverschweißung (30a) in Form einer Konturenverschweißung befestigt ist, dass der Reibbelagträger (11) mindestens eine fensterartige Durchbrechung (40) aufweist, in der ein Füll- oder Dämmmaterial (45) aus einem Kunststoff oder eine Füllung (46) aus Keramik angeordnet ist, wobei der Rauhgrundträger (15) flach verlaufend ist oder im Bereich der fensterartigen Durchbrechung (40) eingezogene Abschnitte aufweist, wobei der Rauhgrundträger (15) mit dem Reibbelagträger (11) im Randbereich (41) der fensterartigen Durchbrechung (40) verschweißt ist, und wobei der Rauhgrundträger (15) aus einem Blech aus einem Verbundmaterial (50) mit einer ersten Komponente (51) aus Kupfer oder verkupfertem Stahlblech und einer zweiten Komponente (52) aus Aluminium besteht, wobei die beiden Komponenten (51, 52) des Verbundmaterials (50) vermittels Ultraschall oder Laser miteinander verschweißt sind, und wobei auf die erste Komponente (51) aus Kupfer oder verkupfertem Stahlblech des Verbundmaterials (50) der Rauhgrund aufgesintert ist.

2. Reibbelag nach Anspruch 1,
**dadurch gekennzeichnet,**
**dass** zwischen dem Rauhgrundträger (15) und dem Reibbelagträger (11) eine Dämpfungsplatte oder -folie (60) aus Gummi, einem gummiartigen Kunststoff oder einem federndelastischen Kunststoff angeordnet ist.

3. Reibbelag nach einem der vorhergehenden Ansprüche,
**dadurch gekennzeichnet,**
**dass** zwischen dem Reibbelagblock (25) und dem Rauhgrund (20) des Rauhgrundträgers (15) auf dem Rauhgrund (20) ein metallischer, galvanischer dem Konturenverlauf des Rauhgrundes des Halterungsbettes (21) folgender Überzug (150) als Korrosionsschutz für den Rauhgrundträger (15) aufgebracht ist, wobei der metallische Überzug (150) aus Kupfer, Silber, Zinn, Cadmium, Zink, Chrom oder einem anderen geeigneten Material besteht.

4. Reibbelag nach einem der vorhergehenden Ansprüche,
**dadurch gekennzeichnet,**
**dass** zwischen dem Reibbelagblock (25) und dem auf den Rauhgrundträger (15) aufgesinterten Halterungsbett (21) auf diesem ein nichtmetallischer, dem Konturenverlauf des Rauhgrundes (20) des Halterungsbettes (21) folgender Überzug (150'), z. B. aus einem hochtemperaturbeständigen Kunststoff als Korrosionsschutz für den Rauhgrundträger (15) aufgebracht ist.

5. Reibbelag nach einem der vorhergehenden Ansprüche,
**dadurch gekennzeichnet,**
**dass** das Halterungsbett (21) aus einem Materialgemisch aus einem Anteil (A) mit niedrigem Schmelzpunkt und einem Anteil (B) aus einem höheren Schmelzpunkt besteht.

6. Reibbelag nach Anspruch 5,
**dadurch gekennzeichnet,**
**dass** der niedrig schmelzende Anteil (A) ein niedrig schmelzendes Metall, wie Zinn o. dgl., oder eine niedrig schmelzende Legierung, wie Bronze, Messing o. dgl., ist.

7. Reibbelag nach einem der Ansprüche 5 oder 6,
**dadurch gekennzeichnet,**
**dass** der höher schmelzende Anteil (B) aus Sand, Keramikpulver o. dgl. besteht.

8. Reibbelag nach einem der vorhergehenden Ansprüche 5 bis 7, **dadurch gekennzeichnet,**
**dass** der Schmelzpunkt des höher schmelzenden Anteils (B) unter dem Schmelzpunkt des Rauhgrundträgers (15) liegt.

9. Reibbelag nach einem der Ansprüche 5 bis 8,
**dadurch gekennzeichnet,**
**dass** der niedrig schmelzende Anteil (A) aus etwa 30 % Bronze und der höher schmelzende Anteil (B) aus etwa 70 % Fe-Pulver besteht.

10. Reibbelag nach Anspruch 9,
**dadurch gekennzeichnet,**
**dass** die verwendete Bronze einen Anteil von 10 % Zinn aufweist.

11. Reibbelag nach einem der vorhergehenden Ansprüche,
**dadurch gekennzeichnet,**
**dass** der Rauhgrund (20) aus jeweils einem Abstand zueinander aufweisenden Greifelementen (115) besteht.

12. Reibbelag nach Anspruch 11,
**dadurch gekennzeichnet,**
**dass** jedes Greifelement (115) in Form einer zylindrischen Säule, kegelstumpfförmigen Säule oder als Kegelstumpf ausgebildet ist.

13. Reibbelag nach Anspruch 11,
**dadurch gekennzeichnet,**
**dass** jedes Greifelement (115') in Form einer Pyramide oder einer dreieckigen, viereckigen oder mehreckigen Grundfläche ausgebildet ist.

14. Reibbelag nach einem der Ansprüche 12 oder 13,
**dadurch gekennzeichnet,**
**dass** der Kegel oder Pyramidenwinkel (Alpha) zwischen der Grundfläche und einer Seite etwa 60° beträgt.

15. Reibbelag nach einem der vorhergehenden Ansprüche,
**dadurch gekennzeichnet,**
**dass** das Halterungsbett (21) neben dem Anteil (A) und dem Anteil (B) einen Anteil (C) aus Kohlenstoff aufweist.

16. Reibbelag nach einem der vorhergehenden Ansprüche,
**dadurch gekennzeichnet,**
**dass** der Belagträger (11') bzw. der Reibbelagträger (11) aus einem flachen oder zwei- oder dreidimensionalen oder einteiligen oder mehrteiligen Trägerblech besteht.

## Claims

1. A friction lining (10) for disk brakes, in particular for high-performance brakes, for road and rail vehicles, comprising
a.) a friction lining support (11) made of a support plate or a support sheet,
b.) a rough base support (15) made of a metal sheet arranged on the friction lining support (11),
c.) a rough base (20) comprising a fixing bed (21) sintered onto the surface (15a) of the rough base support (15) facing away from the friction lining support (11), with individual shaped bodies (22) forming a positive and non-positive fit with the rough base support (15) by means of back-cuts or recesses (23) obtainable by sintering the shaped bodies (22) onto the rough base support (15), and
d.) a friction lining block (25) fixed to the rough base support (15) by means of the rough base (20), made of a pressed friction material, wherein
the friction lining support (11) is made of a metal sheet of small thickness, and the rough base support (15) is made of a thin-walled metal sheet, **characterized in that** the thin-walled rough base support (15) with the sintered rough base (20) is fixed to the friction lining support (11) by means of a circumferential laser butt welding (30a) in the form of a contour welding, that the friction lining support (11) comprises at least one window-like breakthrough (40) in which a plastic filling or insulating material (45) or a ceramic filling (46) is arranged, wherein the rough base support (15) is running flat or comprises recessed sections in the area of the window-like breakthrough (40), wherein the rough base support (15) is welded together with the friction lining support (11) in the border area (41) of the window-like breakthrough (40), and wherein the rough base support (15) consists of a sheet made of a composite material (50) with a first component (51) of copper or coppered sheet steel and a second component (52) of aluminium, wherein the two components (51, 52) of the composite material (50) are welded together by means of ultrasound or laser, and wherein the rough base is sintered onto the first component (51) of copper or coppered sheet steel of the composite material (50).

2. A friction lining according to claim 1, **characterized in that** a damping plate or film (60) of rubber, a rubber-like plastic or a resilient-elastic plastic is arranged between the rough base support (15) and the friction lining support (11).

3. A friction lining according to any one of the preceding claims, **characterized in that** a metallic, galvanic coating (150) following the contour profile of the rough base of the fixing bed (21) is applied to the rough base (20) between the friction lining block (25) and the rough base (20) of the rough base support (15) as corrosion protection for the rough base support (15), wherein the metallic coating (150) is made of copper, silver, tin, cadmium, zinc, chrome or any other suitable material.

4. A friction lining according to any one of the preceding claims, **characterized in that** a non-metallic coating (150'), e.g. of a high-temperature resistant plastic, following the contour profile of the rough base (20) of the fixing bed (21) is applied to the fixing bed (21) between the friction lining block (25) and the fixing bed (21) sintered onto the rough base support (15) as corrosion protection for the rough base support (15)

5. A friction lining according to any one of the preceding claims, **characterized in that** the fixing bed (21) consists of a material mix of a portion (A) with a lower melting point and a portion (B) with a higher melting point.

6. A friction lining according to claim 5, **characterized in that that** the low-melting portion (A) is a low-melting metal such as tin or the like, or a low melting alloy such as bronze or the like.

7. A friction lining according to any one of claims 5 or 6, **characterized in that** the higher-melting portion (B) consists of sand, ceramic powder or the like.

8. A friction lining according to any one of the preceding claims 5 to 7, **characterized in that** the melting point of the higher-melting portion (B) is below the melting point of the rough base support (15).

9. A friction lining according to any one of claims 5 to 8, **characterized in that** the low-melting portion (A) consists of about 30% of bronze and the higher-melting portion (B) consists of about 70% of Fe powder.

10. A friction lining according to claim 9, **characterized in that** the bronze used comprises a 10% portion of tin.

11. A friction lining according to any one of the preceding claims, **characterized in that** the rough base (20) consists of gripping elements (115) having a distance from each other.

12. A friction lining according to claim 11, **characterized in that** each gripping element (115) is designed in the form of a cylindrical column, truncated-cone-like column or as a truncated cone.

13. A friction lining according to claim 11, **characterized in that** each gripping element (115') is designed in the form of a pyramid or a triangular, rectangular or multiangular base.

14. A friction lining according to any one of claims 12 or 13, **characterized in that** the cone or pyramid angle (Alpha) between the base and a side is about 60°.

15. A friction lining according to any one of the preceding claims, **characterized in that** the fixing bed (21) comprises in addition to portion (A) und portion (B) a portion (C) of carbon.

16. A friction lining according to any one of the preceding claims, **characterized in that** the lining support (11') or the friction lining support (11) consists of a flat or two or three-dimensional or one-part or multi-part support sheet.

## Revendications

1. Garniture de friction (10) pour des freins à disque, en particulier pour des freins hautes performances, pour des véhicules routiers et ferroviaires, qui se compose
a.) d'un support de garniture de friction (11) constitué d'une plaque support ou d'une tôle support,
b.) d'un support de fond rugueux (15), disposé sur le support de garniture de friction (11), constitué d'une tôle métallique,
c.) d'un fond rugueux (20) constitué d'un lit de retenue (21) fritté sur la surface (15a) du support de fond rugueux (15) éloignée du support de garniture de friction (11) et constitué de corps moulés (22) individuels, formant une liaison de force et de forme avec le support de fond rugueux (15), avec des contre-dépouilles ou des diminutions (23) pouvant être obtenues par frittage des corps moulés (22) sur le support de fond rugueux (15), et
d.) d'un bloc de garniture de friction (25) qui est fixé sur le support de fond rugueux (15) avec le fond rugueux (20) et se compose d'un matériau de friction pressé,
le support de garniture de friction (11) se composant d'une tôle métallique de faible épaisseur, et le support de fond rugueux (15) se composant d'une tôle métallique à paroi mince,
**caractérisée en ce que** le support de fond rugueux (15) à paroi mince avec le fond rugueux (20) fritté est fixé sur le support de garniture de friction (11) au moyen d'une soudure de bord au laser (30a) réalisée tout autour, sous forme d'une soudure de contour, **en ce que** le support de garniture de friction (11) présente au moins une traversée (40) de type fenêtre dans laquelle un matériau de remplissage ou d'isolation (45) constitué de matériau synthétique ou d'un remplissage (46) en céramique est disposé, le support de fond rugueux (15) étant disposé à plat ou présentant dans la zone de la traversée (40) de type fenêtre des segments rentrés, le support de fond rugueux (15) étant assemblé par soudage avec le support de garniture de friction (11) dans la zone de bord (41) de la traversée (40) de type fenêtre, et le support de fond rugueux (15) se composant d'une tôle constituée d'un matériau composite (50) avec une première composante (51) en cuivre ou en tôle d'acier cuivrée et avec une seconde composante (52) en aluminium, les deux composantes (51, 52) étant assemblées l'une à l'autre par soudage aux ultrasons ou au laser, et le fond rugueux étant fritté sur la première composante (51) en cuivre ou en tôle d'acier cuivrée du matériau composite (50).

2. Garniture de friction selon la revendication 1, **caractérisé en ce que**, entre le support de fond rugueux (15) et le support de garniture de friction (11), il est disposé une plaque ou un film d'amortissement (60) en caoutchouc, en matériau synthétique de type caoutchouc ou en matériau synthétique présentant une élasticité à ressort.

3. Garniture de friction selon une des revendications précédentes, **caractérisée en ce que**, entre le bloc de garniture de friction (25) et le fond rugueux (20) du support de fond rugueux (15), il est apposé sur le fond rugueux (20) un revêtement (150) métallique, galvanique, qui suit le tracé de contour du fond rugueux du lit de retenue (21), en tant que protection anticorrosion pour le support de fond rugueux (15), le revêtement (150) métallique étant composé de cuivre, d'argent, d'étain, de cadmium, de zinc, de chrome ou d'un autre matériau approprié.

4. Garniture de friction selon une des revendications précédentes, **caractérisée en ce que**, entre le bloc de garniture de friction (25) et le lit de retenue (21) fritté sur le support de fond rugueux (15), il est appliqué sur ce lit un revêtement (150') non métallique, qui suit le tracé de contour du fond rugueux (20) du lit de retenue (21), constitué par exemple en matériau synthétique résistant aux températures élevées, en tant que protection anticorrosion pour le support de fond rugueux (15).

5. Garniture de friction selon une des revendications précédentes, **caractérisée en ce que** le lit de retenue (21) se compose d'un mélange de matériau constitué d'une fraction (A) ayant un point de fusion bas et d'une fraction (B) ayant un point de fusion plus élevé.

6. Garniture de friction selon la revendication 5, **caractérisée en ce que** la fraction (A) ayant un point de fusion bas est un métal à bas point de fusion comme l'étain ou similaire, ou un alliage à bas point de fusion comme le bronze, le laiton ou similaire.

7. Garniture de friction selon une des revendications 5 ou 6, **caractérisée en ce que** la fraction (B) ayant un point de fusion plus élevé se compose de sable, de poudre céramique ou similaire.

8. Garniture de friction selon une des revendications précédentes 5 à 7, **caractérisée en ce que** le point de fusion de la fraction (B) ayant un point de fusion plus élevé est inférieur au point de fusion du support de fond rugueux (15).

9. Garniture de friction selon une des revendications 5 à 8, **caractérisée en ce que** la fraction (A) ayant un point de fusion bas se compose d'environ 30% de bronze, et **en ce que** la fraction (B) ayant un point de fusion plus élevé se compose d'environ 70% de poudre Fe.

10. Garniture de friction selon la revendication 9, **caractérisée en ce que** le bronze utilisé présente une fraction de 10 % d'étain.

11. Garniture de friction selon une des revendications précédentes, **caractérisée en ce que** le fond rugueux (20) se compose d'éléments de griffe (115) présentant respectivement un intervalle entre eux.

12. Garniture de friction selon la revendication 11, **caractérisée en ce que** chaque élément de griffe (115) est constitué en forme de colonne cylindrique, de colonne en forme de tronc de cône ou en tant que tronc de cône.

13. Garniture de friction selon la revendication 11, **caractérisée en ce que** chaque élément de griffe (115') est constitué en forme de pyramide, ou de surface de base triangulaire, quadrangulaire ou polygonale.

14. Garniture de friction selon une des revendications 12 ou 13, **caractérisée en ce que** le cône ou l'angle de pyramide (alpha) entre la surface de base et un côté est environ égal à 60°.

15. Garniture de friction selon une des revendications précédentes, **caractérisée en ce que** le lit de retenue (21) présente, outre la fraction (A) et la fraction (B), une fraction (C) en carbone.

16. Garniture de friction selon une des revendications précédentes, **caractérisée en ce que** le support de garniture (11') ou le support de garniture de friction (11) se compose d'une tôle support plate, ou à deux ou à trois dimensions, ou en une partie ou en plusieurs parties.
